# EUROPEAN PATENT APPLICATION

(11) **EP 2 348 197 A2**
(43) Date of publication of application: **27.07.2011**
(21) Application number: 10172223.9
(22) Date of filing: 06.08.2010
(51) Int. Cl.: F01K 19/10, F01K 17/00

(54) **Latent heat recovery generator system**

(30) Priority: 04.12.2009 TW 98222661
(71) Applicant: Lee, Cheng-Chun, Luzhun Township Taoyuan County 33850, Chinese Taipei (CN); Kao, Hung-Yuan, Roosevelt Rd. Wenshan Dist., Taipei City 11674, Chinese Taipei (CN)
(72) Inventor: Lee, Cheng-Chun, 33850, Taoyuan County (TW); Kao, Hung-Yuan, 11674, Taiphe City (TW); Lee, Cheng-Chu, 11674, Taipei City (TW)
(74) Representative: Colens, Alain M.G.M.

(57) **Abstract**

A heat recovery generator system (1) includes a boiler (11) converting water into high-pressure steam that passes through a steam pipe (12), a turbine (13), a first pipe (10), a condenser (15), and a second pipe (102) in sequence. The steam condenses into water after passing through the condenser (15). The condensed water passes through a water pump (16), a water supply pipe (17), and a heater (18) to the boiler (11). A latent heat recovery device (2) includes a compressor (21) that outputs a coolant moving along a coolant pipe (22) passing in sequence through a first heat exchanger device (23) and a second heat exchanger device (25) and then returning to the compressor (21). A third pipe (103) branches from the first pipe (101) and is connected to a fourth pipe (104) via the second heat exchanger device (25). The coolant absorbs heat from the steam via the second heat exchanger device (25). Heat recovery water absorbs the heat released from the coolant through the first heat exchanger device (23).

## Description

### BACKGROUND OF THE INVENTION

The present invention relates to a generator system and, more particularly, to a generator system, such as a steam turbine generator system or a steam-electric cogeneration system, capable of recovering latent heat.

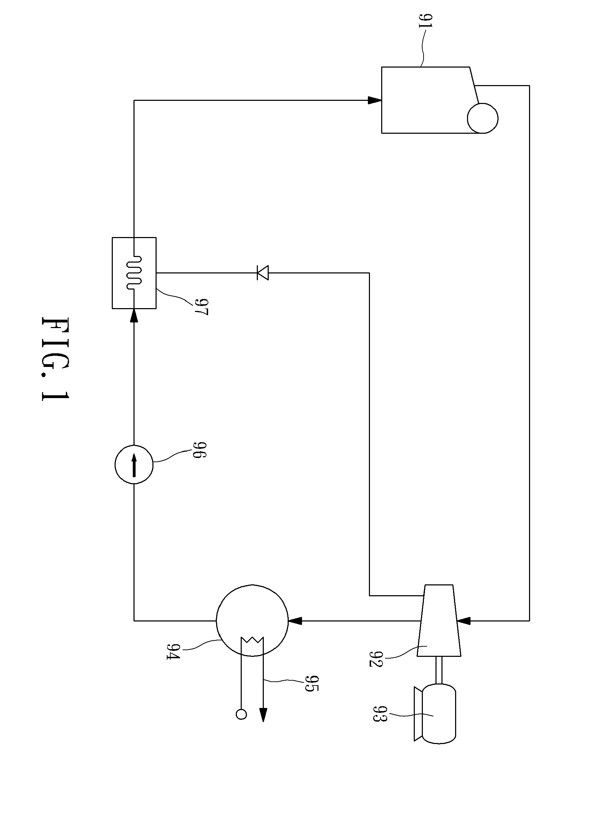

Generator systems of power plants and steam-electric cogeneration systems generally generate electricity through thermal power. FIG 1 shows a conventional steam turbine generator system, wherein fuel or fuel gas is burned to heat water in a boiler 91. The high-pressure steam moves from the boiler 91 through a turbine 92 to drive a generator 93 to generate electricity. The steam turns into condensed water after passing through a condenser 94. A water pump 96 conveys the condensed water to a heater 97 where the water is heated and then conveyed to the boiler 91. The condenser 94 uses a cooling tower and a large quantity of cooling water 95 to condense (i.e., to remove the latent heat of) the steam passing through the condenser 94 and, thus, incurs considerable costs. Furthermore, the thermal energy can not be effectively utilized by the large quantity of cooling water 95 and, thus, can not be utilized in industry processes, businesses, and houses, leading to a waste in energy and adversely affecting economic effect.

### BRIEF SUMMARY OF THE INVENTION

An objective of the present invention is to provide a latent heat recovery generator system including a heat recovery pipe to recover the latent heat released from the steam during condensation of the steam. The recovered heat can be utilized to heat water, and the hot water can be supplied to the boiler, industry processes, businesses, animal husbandry industry, houses, and entertainment businesses that require hot water, saving precious energy, reducing costs, and increasing economic effect.

The present invention fulfills the above objective by a providing, in a preferred form, a heat recovery generator system including comprising a boiler converting water into high-pressure steam that passes through a steam pipe, a turbine, a first pipe, a condenser, and a second pipe in sequence. The steam condenses into water after passing through the condenser. The condensed water passes through a water pump, a water supply pipe, and a heater to the boiler. A latent heat recovery device includes a compressor that outputs a coolant moving along a coolant pipe passing in sequence through a first heat exchanger device and a second heat exchanger device and then returning to the compressor. Heat recovery water passes through the first heat exchanger device. A third pipe branches from the first pipe and is connected to a fourth pipe via the second heat exchanger device, condensing the steam from the turbine into water. The coolant absorbs heat from the steam via the second heat exchanger device. The coolant releases heat to the first heat exchanger device. The heat recovery water absorbs the heat released from the coolant through the first heat exchanger device.

In a preferred form, a heat recovery pipe is provided for conveying the heat recovery water to pass through the first heat exchanger device. The heat recovery pipe includes an inlet end adapted to be connected to an external water source. The heat recovery pipe further includes an outlet end adapted to be connected to a consumer device.

In another preferred form, the first heat exchanger device includes a first heat exchanger and a second heat exchanger. The coolant pipe branches out and passes through the first and second heat exchangers. The coolant from the compressor passes through the first and second heat exchangers to release heat. The heat recovery pipe passes through the first heat exchanger. The water supply pipe passes through the second heat exchanger to absorb heat from the coolant passing through the second heat exchanger. Then, the water supply pipe passes through the heater to the boiler.

In a further preferred form, the heat recovery water is the condensed water passing through the water supply pipe. The water supply pipe passes through the first heat exchanger device. The condensed water in the water supply pipe absorbs the heat from the coolant through the first heat exchanger device and then passes through the heater to the boiler.

In preferred forms, the fourth pipe has an outlet connected to the water pump. The heat recovery water is at a temperature of 50-90°C after passing through the first heat exchanger device. Two control valves are respectively mounted on the first and third pipes.

The present invention will become clearer in light of the following detailed description of illustrative embodiments of this invention described in connection with the drawings.

### DESCRIPTION OF THE DRAWINGS

The illustrative embodiments may best be described by reference to the accompanying drawings where:
FIG 1 shows a schematic diagram of a conventional steam turbine generator system.
FIG 2 shows a schematic diagram of a latent heat recovery generator system of an embodiment according to the preferred teachings of the present invention.
FIG 3 shows a schematic diagram of a latent heat recovery generator system of another embodiment according to the preferred teachings of the present invention.
FIG 4 shows a schematic diagram of a latent heat recovery generator system of a further embodiment according to the preferred teachings of the present invention.

All figures are drawn for ease of explanation of the basic teachings of the present invention only; the extensions of the figures with respect to number, position, relationship, and dimensions of the parts to form the preferred embodiments will be explained or will be within the skill of the art after the following teachings of the present invention have been read and understood. Further, the exact dimensions and dimensional proportions to conform to specific force, weight, strength, and similar requirements will likewise be within the skill of the art after the following teachings of the present invention have been read and understood.

### DETAILED DESCRIPTION OF THE INVENTION

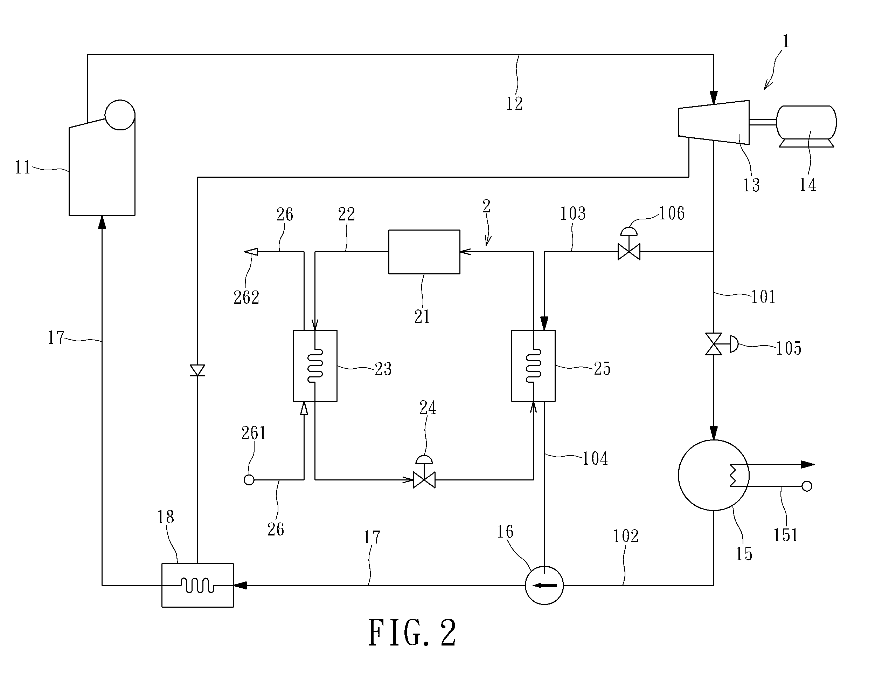

FIG 2 shows a latent heat recovery generator system 1, such as a stem turbine generator system or a steam-electric cogeneration system, of an embodiment according to the preferred teachings of the present invention. The generator system 1 includes a boiler 11 includes a boiler 11 that converts water into high-pressure steam that passes through a steam pipe 12, a turbine 13, a first pipe 101, a condenser 15, and a second pipe 102 in sequence. The high-pressure steam drives the turbine 13, which, in turn, drives a generator 14 to generate electricity. The steam condenses into water after passing through the condenser 15. Then, a water pump 16 conveys the water to the boiler 11 via a water supply pipe 17. A heater 18 is provided on the water supply pipe 17 to heat the water before the water is supplied to the boiler 11.

The generator system 1 further includes a latent heat recovery device 2 and a heat recovery pipe 26. The latent heat recovery device 2 includes a compressor 21 that outputs a high-temperature, high-pressure coolant. The coolant moves along a coolant pipe 22 and passes in sequence through a first heat exchanger device 23, an expansion valve 24, and a second heat exchanger device 25 and then returns to the compressor 21. Thus, the coolant circulates along the coolant pipe 22. An inlet end of the heat recovery pipe 26 is connected to an external water source 261 to convey heat recovery water through the first heat exchanger device 23. The heat recovery water is heated by the heat transferred from the high-temperature, high-pressure coolant through the first heat exchanger device 23 and is output through an outlet end of the heat recovery pipe 26. The temperature of the coolant leaving the first heat exchanger device 23 is lowered. The pressure of the coolant is reduced after passing through the expansion valve 24. A third pipe 103 branches from the first pipe 101 and is connected to a fourth pipe 104 via the second heat exchanger device 25. The fourth pipe 104 has an outlet connected to the water pump 16. Steam transforms into condensed water after passing through the second heat exchanger device 25. The second heat exchanger device 25 is located on the coolant pipe 22 and between the compressor 21 and the expansion valve 24. The low-temperature, low-pressure coolant absorbs heat from the steam through the second heat exchanger device 25 and becomes high-temperature, low-pressure coolant that is fed back to compressor 21. Furthermore, at the first heat exchanger device 23, the coolant releases heat to heat the heat recovery water in the heat recovery pipe 26 flowing through the first heat exchanger device 23. Hot or warm water can be output through the outlet end of the heat recovery pipe 26 that is connected to a consumer device 262 such as an industry process, a business, animal husbandry industry, a house, and an entertainment business that requires hot water. The latent heat released during condensation of steam is, thus, recovered, saving precious energy, reducing costs, and increasing economic effect.

In operation, the steam at an input of the turbine 13 is at a temperature of 350-510°C and at a pressure of 30-120 kg/cm². The stem at an output of the turbine 13 is at a temperature of 45-65°C and at a pressure of 0.1-0.25 kg/cm². A portion of the steam from the turbine 13 passes through the first pipe 101 to the condenser 15 and a cooling water 151 in the condenser 15 and then to the water pump 16 via the second pipe 102. Another portion of the steam from the turbine 13 passes through the third pipe 103 and the second heat exchanger device 25 and is condensed into water. The condensed water passes through the fourth pipe 104 to the water pump 16. The coolant of the latent heat recovery device 2 absorbs the heat released by the steam through the second heat exchanger device 25, and the heat recovery pipe 26 absorbs the heat from the coolant through the first heat exchanger device 23 and outputs hot or warm water. Thus, the latent heat released during condensation of the steam can be recovered and supplied to the consumer device 262.

It can be appreciated that a portion of the steam can be conveyed from the turbine 13 through a pipe to the heater 18 to provide a heat source for heating water flowing through the heater 18 along the water supply pipe 17. However, the heat source for the heater 18 can be an electric heater or any other suitable heat source.

In the embodiment shown in FIG 2, the water temperature is about 0-50°C at the inlet end of the heat recovery pipe 26 and about 50-90°C at the outlet end of the heat recovery pipe 26. Furthermore, a control valve 105 is mounted on the first pipe 105, and another control valve 106 is mounted on the third pipe 103. The control valves 105 and 106 control the steam flow passing through the first pipe 101 and/or the third pipe 103 and control the ratio of the steam flow passing through the first pipe 101 to the steam flow passing through the third pipe 103.

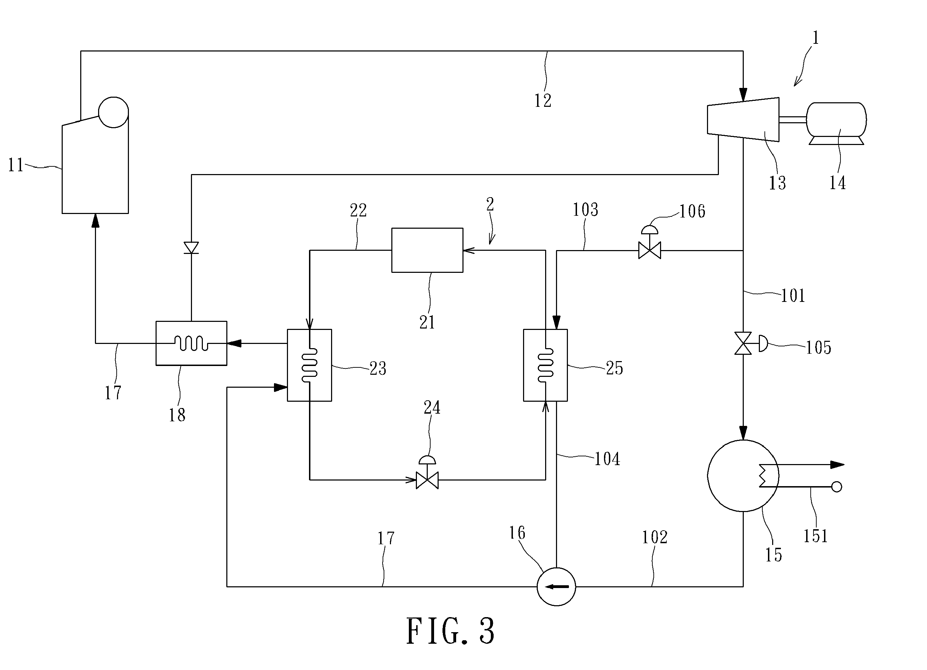

FIG 3 shows another embodiment of the generator system 1 according to the teachings of the present invention modified from the embodiment of FIG 2. Specifically, the water supply pipe 17 passes through the first heat exchanger device 23 and the heater 18 to the boiler 11. The heat recovery water is the condensed water passing through the water supply pipe 17 and absorbs the heat from the coolant at the first heat exchanger device 23 to become hot water with a temperature of about 90°C. The hot water leaving the first heat exchanger device 23 is heated by the heater 18 to a temperature above about 102°C and then supplied to the boiler 11. The amount of high-pressure steam supplied to the heater 18 can be reduced.

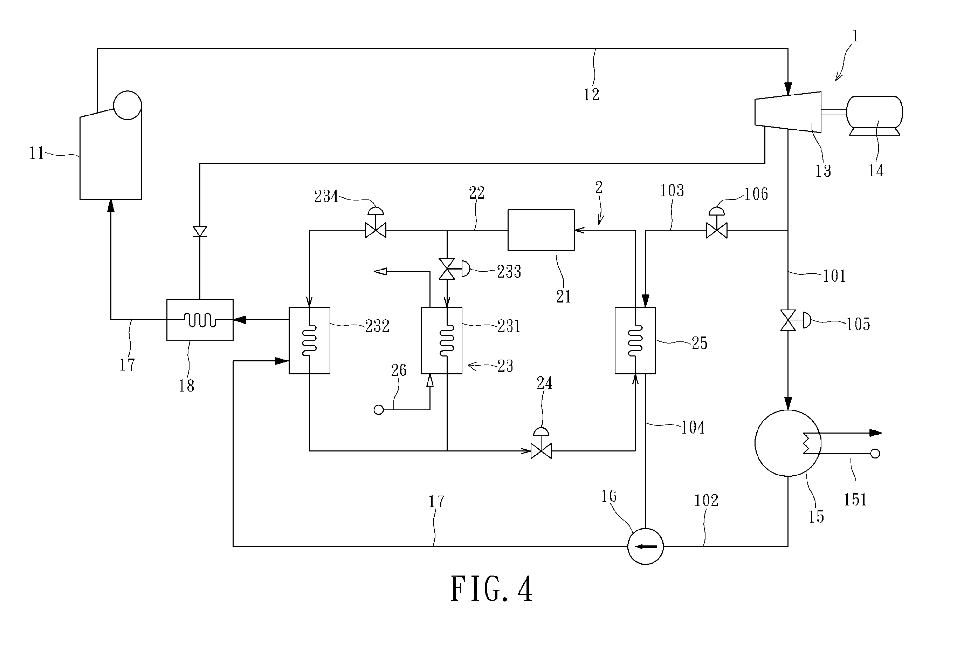

FIG 4 shows another embodiment of the generator system 1 according to the preferred teachings of the present invention. Specifically, the first heat exchanger device 23 includes first and second heat exchangers 231 and 232. The coolant pipe branches out and passes through the first and second heat exchangers 231 and 232. The coolant from the compressor 21 passes through the first and second heat exchangers 231 and 232 to release heat. Control valves 233 and 234 are mounted on the coolant pipe 22 to control the ratio of the coolant flow passing through the first heat exchanger 231 to the coolant flow passing through the second heat exchanger 232. The heat recovery pipe 26 passes through the first heat exchanger 231 to output heated water. The water supply pipe 17 passes through the second heat exchanger 232 such that the condensed water absorbs heat from the coolant and then passes through the heater 18 to the boiler 11.

The generator systems 1 according to the teachings of the present invention can recover the latent heat released by the steam during condensation and can be supplied to the boiler 11 and industry processes, businesses, animal husbandry industry, houses, and entertainment businesses that require hot water, saving precious energy, reducing costs, and increasing economic effect.

Thus since the invention disclosed herein may be embodied in other specific forms without departing from the spirit or general characteristics thereof, some of which forms have been indicated, the embodiments described herein are to be considered in all respects illustrative and not restrictive. The scope of the invention is to be indicated by the appended claims, rather than by the foregoing description, and all changes which come within the meaning and range of equivalency of the claims are intended to be embraced therein.

## Claims

1. A heat recovery generator system (1) comprising a boiler (11) converting water into high-pressure steam that passes through a steam pipe (12), a turbine (13), a first pipe (10), a condenser (15), and a second pipe (102) in sequence, with the steam condensing into water after passing through the condenser (15), with the condensed water passing through a water pump (16), a water supply pipe (17), and a heater (18) to the boiler (11), **characterized in that**:
a latent heat recovery device (2) includes a compressor (21) that outputs a coolant moving along a coolant pipe (22) passing in sequence through a first heat exchanger device (23) and a second heat exchanger device (25) and then returning to the compressor (21), heat recovery water passes through the first heat exchanger device (23), a third pipe (103) branches from the first pipe (101) and is connected to a fourth pipe (104) via the second heat exchanger device (25), condensing the steam from the turbine (13) into water, the coolant absorbs heat from the steam via the second heat exchanger device (25), the coolant releases heat to the first heat exchanger device (23), the heat recovery water absorbs the heat released from the coolant through the first heat exchanger device (23).

2. The generator system as claimed in claim 1, further comprising: a heat recovery pipe (26) for conveying the heat recovery water to pass through the first heat exchanger device (23), with the heat recovery pipe (26) including an inlet end adapted to be connected to an external water source, with the heat recovery pipe (26) further including an outlet end adapted to be connected to a consumer device (262).

3. The generator system as claimed in claim 2, with the first heat exchanger device (23) including a first heat exchanger (231) and a second heat exchanger (232), with the coolant pipe branching out and passing through the first and second heat exchangers (231, 232), with the coolant from the compressor (21) passing through the first and second heat exchangers (231, 232) to release heat, with the heat recovery pipe (26) passing through the first heat exchanger (231), with the water supply pipe (17) passing through the second heat exchanger (232) to absorb heat from the coolant passing through the second heat exchanger (232), with the water supply pipe (17) then passing through the heater (18) to the boiler (11).

4. The generator system as claimed in claim 1, with the heat recovery water being the condensed water passing through the water supply pipe (17), with the water supply pipe (17) passing through the first heat exchanger device (23), with the condensed water in the water supply pipe (17) absorbing the heat from the coolant through the first heat exchanger device (23) and then passing through the heater (18) to the boiler (11).

5. The generator system as claimed in claim 2 or 4, wherein the fourth pipe (104) has an outlet connected to the water pump (16).

6. The generator system as claimed in claim 5, with the heat recovery water being at a temperature of 50-90°C after passing through the first heat exchanger device.

7. The generator system as claimed in claim 5, further comprising: two control valves (105, 106) respectively mounted on the first and third pipes (101, 103).
